(19) Europäisches Patentamt
European Patent Office
Office européen des brevets

(11) **EP 2 234 236 B1**

(12) **EUROPEAN PATENT SPECIFICATION**

(45) Date of publication and mention
of the grant of the patent:
**23.05.2018 Bulletin 2018/21**

(51) Int Cl.:
**H02H 7/08** (2006.01)

(21) Application number: **09004087.4**

(22) Date of filing: **23.03.2009**

(54) **Thermal overload relay with motor diagnostics**

Wärmeüberlastungsrelais mit Motordiagnosen

Relais de surcharge thermique avec diagnostics de moteur

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**29.09.2010 Bulletin 2010/39**

(73) Proprietor: **ABB AG**
**68309 Mannheim (DE)**

(72) Inventors:
• **Andenna, Andrea**
**5405 Baden-Daetwill (CH)**
• **Orkisz, Michael, Dr.**
**30-076 Krakow (PL)**
• **Müller, Peter O.**
**69221 Dossenheim (DE)**
• **Ukil, Abhisek**
**5404 Baden (CH)**

(56) References cited:
**US-A- 5 301 123     US-A1- 2005 007 096**
**US-B1- 6 289 735**

• **FARAG S F ET AL: "An Integrated On-Line Motor Protection System" PROCEEDINGS OF 1994 IEEE INDUSTRY APPLICATIONS SOCIETY ANNUAL MEETING 2-6 OCT. 1994 DENVER, CO, USA, vol. 1, 1994, pages 117-122 vol.1, XP002533737 IAS '94. Conference Record of the 1994 Industry Applications Conference Twenty-Ninth IAS Annual Meeting (Cat. No.94CH34520) IEEE New York, NY, USA ISBN: 0-7803-1993-1**
• **NANDI S ET AL: "Condition monitoring and fault diagnosis of electrical machines-a review" PROCEEDINGS OF 34TH ANNUAL MEETING OF THE IEEE INDUSTRY APPLICATIONS 3-7 OCT. 1999 PHOENIX, AZ, USA, vol. 1, 1999, pages 197-204 vol.1, XP002533738 Conference Record of the 1999 IEEE Industry Applications Conference. Thirty-Forth IAS Annual Meeting (Cat. No.99CH36370) IEEE Piscataway, NJ, USA ISBN: 0-7803-5589-X**
• **THOMSON W T: "On-line MCSA to diagnose shorted turns in low voltage stator windings of 3-phase induction motors prior to failure" PROCEEDINGS OF INTERNATIONAL ELECTRIC MACHINES AND DRIVES CONFERENCE - IEMDC 2001 17-20 JUNE 2001 CAMBRIDGE, MA, USA, 2001, pages 891-898, XP002533739 IEMDC 2001. IEEE International Electric Machines and Drives Conference (Cat. No.01EX485) IEEE Piscataway, NJ, USA ISBN: 0-7803-7091-0**

## Description

The invention is about an overload protection device to protect an electric load, especially an induction motor, in a load circuit made up by an electric supply line providing a load current and the electric load, the device comprising first means for deriving a measurement signal corresponding to the load current, an overload control circuit for determining an overload situation, the overload control circuit comprising second means for deriving an indicator signal for an overload situation based on the measurement signal, according to some features of claim 1. The invention is further about a motor controller, providing motor control and motor protection functions, comprising such an overload protection device.

Even further the invention is about a method to be used with an overload protection device to protect an electric load, especially an induction motor, in a load circuit, the load circuit being made up by an electric supply line providing a load current, and by the electric load, the overload protection device providing a measurement signal corresponding to the load current or an analysis signal derived from the measurement signal.

Finally the invention is about a computer program and a computer program product with program code configured to execute such a method, if the program is run on a computer or microprocessor.

A low voltage overload protection device, also called overload protection relay, protects an industrial motor, for example an induction motor, against possible overloads, excessive overcurrent etc. Previously this overload protection was provided by passing some or all of the motor current through a bimetallic switch element. The current flow heats the bimetallic material of the switch by an amount that corresponds to the magnitude of the current. When the motor current exceeds the safety threshold for a defined period of time, the heat causes the bimetallic material to bend opening switch contacts and initiating the termination of the application of current to the motor. The level of current at which the bimetallic switch opens is difficult to calibrate and tends to become miscalibrated over time.

A more reliable device can be realized by incorporating an electronic sensing and control mechanism to perform the overload protection. Such an electronic overload control circuit comprises means for measuring the motor current, like a current transformer, and makes use of a thermal model of the motor, correlating current and time measurements to the internal motor temperature and temperature distribution. So without a temperature sensor, the thermal model fed with current and time measurement data will deliver an overload warning signal when the calculated motor temperature exceeds an admissible level. These so called electronic overload relays are more reliable devices and easier to calibrate compared to the bimetallic types.

Examples for electronic overload relays are shown in DE 197 48 627 A1 and EP 0 477 959 A2. The electronic overload relays shown there comprise a microprocessor, which includes in its application program the thermal model and which calculates the motor temperature from the measurement signal of motor current and time.

An intelligent motor controller, like the product sold by the company ABB under the product name Universal Motor Controller UMC22, offer motor protection and motor control functions of fixed speed motors in one device. Because of their features intelligent motor controllers are often used in applications where unplanned downtimes can be very costly, for example in the chemical or petrochemical process industry.

Intelligent motor controllers protect all sizes of standard motors with nominal currents ranging from e.g. 240mA to up to 850A. Usually they are installed in so called motor control centers and in larger plants hundreds of them might be used. Therefore their design is very cost sensitive and optimized for low cost.

After a motor failure has appeared, motor diagnosis information is often used to find out the cause for the failure. For cost reasons, users of motors are more and more interested to get motor diagnosis information before a critical fault actually happens. This gives time to organize spare parts etc.

Known motor controllers and known electronic overload protection devices are mainly focussed to protect and control a motor. They in some versions can also read out controller diagnosis information, like the number of protection trips that have occurred. Based on further special thermal models intelligent motor controllers can provide information about operating conditions, like for example earth faults, phase loss, current unbalance, etc.

But they are not able to detect hardware faults in the motor itself, like indication of a broken rotor bar or of a winding short circuit. After a while of operation with such hardware faults, a motor does not produce the expected power and produces unusual noise or vibrations, so it is usually unmounted and checked in a workshop. Alternatively special measurement equipment can be mounted to the motor on a temporary basis, e.g. vibration analysis tools, to find out if there is a problem within the motor. This is not cost efficient for low cost low voltage motors, and cannot be left at the motor for a continuous and real-time fault diagnosis during normal motor operation.

US 2005/0007096 A1 discloses a system and a method for proactive motor wellness diagnosis, whereby within a certain frequency side band to the base frequency, the frequency components in the current spectrum are summed up within the side band, averaging over the frequency range of the side band to form a mechanical fault signature.

It is an objective of the present invention to further improve and simplify an electronic overload protection device so that it can be used for low-cost, on-line motor diagnosis purposes.

It is a further objective of the present invention to provide an improved motor controller, providing motor control and motor protection functions, so that it additionally provides on-line motor diagnosis functions.

It is an even further objective of the present invention to provide a method to be used with an overload protection device allowing to produce motor diagnostic information from the overload protection device.

Finally it is an objective of the present invention to provide a computer program and a computer program product with program code configured to execute the method to be used with an overload protection device allowing to produce motor diagnostic information from the overload protection device.

The invention is defined by the features of the independent claims. Preferred embodiments are defined in the dependent claims.

The invention consists in an overload protection device that further comprises a load diagnostic circuit, the load diagnostic circuit comprising third means for generating a frequency spectrum of the measurement signal or of an analysis signal derived from the measurement signal, and fourth means for analysing the frequency spectrum and deriving diagnostic information concerning the condition of the load from the frequency spectrum. Hence, it is the advantage of this invention that motor current signature analysis is used for motor diagnostic purposes alongside low voltage overload protection relays with limited measurement and computational resources. This enables diagnosis of low voltage motors during their normal operation, being functional in real time while the relay is in operation, and helps to detect problems early and to schedule maintenance actions in time. In other words, the core idea of the invention is to extend the utilization of the motor current measurements, which in the prior art are done only for overload protection or surveillance of operation conditions, for advanced motor diagnostics. Examples for advanced motor diagnostics that can be done using a device according to the invention comprise broken bar detection, current-based detection of shorted stator-turns, bearing damage, air-gap eccentricity, etc. Up to now such motor diagnostics features could not be used with small overload protection devices.

In accordance with one feature of the invention, the third means is configured to perform a Discrete Fourier Transformation, DFT, or a Fast Fourier Transformation, FFT, of the measurement signal or of an analysis signal derived from the measurement signal.

In accordance with another feature of the invention the fourth means is configured to determine the appearance of frequency peaks in a predetermined frequency region of the frequency spectrum of the measurement signal or of an analysis signal derived from the measurement signal.

In accordance with an additional feature of the invention the load diagnostic circuit comprises fifth means to derive an analysis signal from the measurement signal.

In accordance with an additional feature of the invention the fifth means comprises a rectifier so that the analysis signal corresponds to the rectified load current.

In accordance with an additional feature of the invention the fifth means comprises a zero crossing determinator so that the analysis signal is based on recording the time difference between successive zero crossing times of the load current.

In accordance with an additional feature of the invention the first means comprises a zero crossing determinator so that the measurement signal is based on recording the time difference between successive zero crossing times of the load current. An efficient way to realise a zero crossing determinator is to apply a dynamic thresholding method, which requires low computational resources.

In accordance with an additional feature of the invention the device comprises a microprocessor and the load diagnostic circuit is realised as at least one functional software module within the application program of the microprocessor. It is thus an advantage of the invention that no additional hardware is required to enable an electronic overload protection device to become an electronic overload protection device according to the invention. A DFT algorithm can run as part of the application program of the microprocessor and can be made very computational-efficient. Also, especially if an analysis signal based on recording the time difference between successive zero crossing times of the load current is used, the number of data points is reduced, resulting in low computational resources needed for performing the frequency analysis, so that not much computational power is needed for the microprocessor. This enables the use of low-cost microprocessors in electronic overload protection devices according to the invention and thus enables to integrate the diagnostic functionality in low-cost low voltage protection devices. The algorithms needing few computational resources, they thus also are performed very fast, enabling an on-line and real-time diagnosis to be performed.

The invention further consists of a method to be used with an overload protection device to protect an electric load, especially an induction motor, in a load circuit, the load circuit being made up by an electric supply line providing a load current, and by the electric load, the overload protection device providing a measurement signal corresponding to the load current or an analysis signal derived from the measurement signal, the method comprising the steps of generating a frequency spectrum of the measurement signal or the analysis signal, analysing the frequency spectrum, to detect the appearance of frequency peaks in a predetermined frequency region of the frequency spectrum, the frequency peaks being characteristic for specific faults in the load circuit, and producing a fault indicating signal, indicative of specific faults depending on the peak frequency.

In accordance with an additional feature of the invention a signal indicating the occurrence of a broken rotor bar in an induction motor is produced if peaks in the frequency spectrum are detected at frequencies $f_{brb}$:

$$f_{brb} = (1 \pm 2ks)f_1$$

where $s$ is the slip, $f_1$ the supply frequency, and a parameter $k = 1,2,3,....$

In accordance with an additional feature of the invention a signal indicating the occurrence of a winding shortage is produced if peaks in the frequency spectrum are detected at frequencies $f_{st}$:

$$f_{st} = \left( \frac{n(1-s)}{p} \pm k \right)f_1 ,$$

where, $s$ is the slip, $f_1$ the supply frequency, $p$ the pole pairs, $n, k$ are two parameters, $n = 1,2,3,...,$ and $k = 1,3,5,...$ .

In accordance with an additional feature of the invention the analysis signal derived from the measurement signal is based on recording the time difference between successive zero crossing times of the load current.

The invention further consists of a motor controller, providing motor control and motor protection functions, comprising an overload protection device that further comprises a load diagnostic circuit, the load diagnostic circuit comprising third means for generating a frequency spectrum of the measurement signal or of an analysis signal derived from the measurement signal, and fourth means for analysing the frequency spectrum and deriving diagnostic information concerning the condition of the load from the frequency spectrum.

Finally the invention consists of a computer program and a computer program product with program code configured to execute a method to be used with an overload protection device to protect an electric load, especially an induction motor, in a load circuit, the load circuit being made up by an electric supply line providing a load current, and by the electric load, the overload protection device providing a measurement signal corresponding to the load current or an analysis signal derived from the measurement signal, the method comprising the steps of generating a frequency spectrum of the measurement signal or the analysis signal, analysing the frequency spectrum, to detect the appearance of frequency peaks in a predetermined frequency region of the frequency spectrum, the frequency peaks being characteristic for specific faults in the load circuit, and producing a fault indicating signal, indicative of specific faults depending on the peak frequency, if the program is run on a computer or microprocessor. The program would according to the invention be run as part of the application program of the microprocessor within the electronic overload protection device.

The invention is now described in more detail with reference to embodiments thereof given by way of example and shown in the appended drawings.

Brief description of the drawings

Fig. 1      is a block diagram of a load circuit made up by an electric supply line, a motor, a contactor and an overload protection device,

Fig. 2      is a block diagram of an electronic overload protection device according to the invention,

Fig. 3      is a block diagram of an electronic overload protection device according to a further embodiment of the invention, wherein the load diagnostic circuit comprises fifth means to derive an analysis signal from the measurement signal,

Fig. 4      is a block diagram of an electronic overload protection device according to a further embodiment of the invention, wherein the first means comprises a zero crossing determinator so that the measurement signal is based on recording the time difference between successive zero crossing times of the load current,

Fig. 5      is a block diagram of a motor controller with an electronic overload protection device and additional motor control functionality according to a further embodiment of the invention, and

Fig. 6      is an example of a frequency spectrum of the measurement signal for a motor with a broken stator bar compared to the frequency spectrum for a motor with no broken bar.

Detailed description of the preferred embodiments

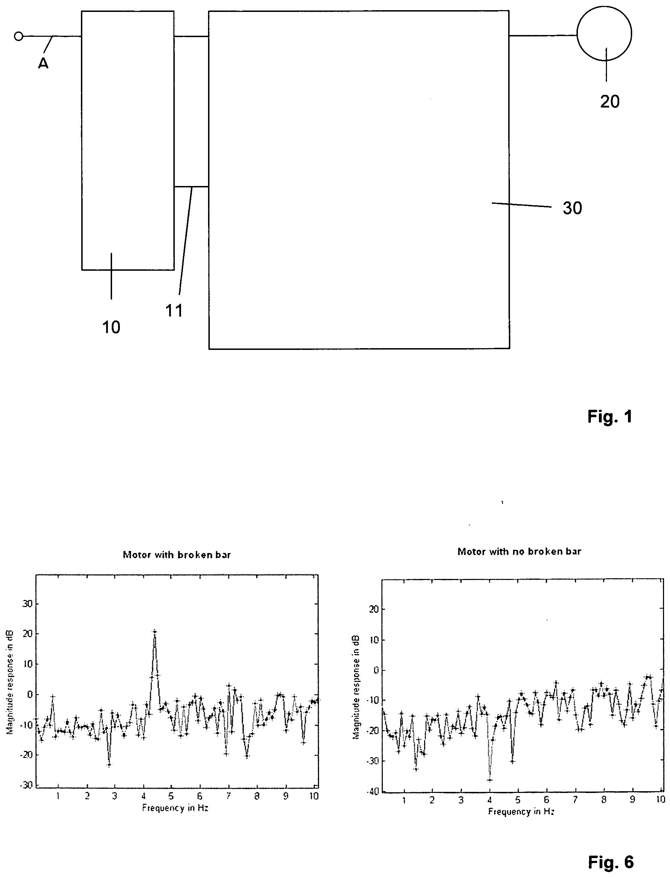

With initial reference to figure 1, a load circuit is shown made up by an electric supply line A providing a load current and an electric load 20. The supply line A is coupled to a source of alternating electricity (not shown). The single supply line A is shown representing a single phase or a three phase system. The functionality of the overload protection device would not be affected by the application in a three phase electrical system.

The supply line A is connected to a load in form of a motor 20 by a contactor 10 and an overload protection device 30. In case of a three phase system the motor 20 is a fixed speed motor, also described as induction motor, and in principle known since long time. The contactor has an internal set of contacts (not shown) coupling the supply line to the overload protection device and the motor. The contactor receives an activation signal via a signal line 11 from the overload protection device 30. The signal line 11 can be an electric signal path or a mechanical coupling. In case the overload protection device 30 detects an overload situation, it transmits an activation signal to the contactor, as a result of which the internal contacts of the contactor are activated to interrupt the power supply to the motor 20. Of course other embodiments of motor protection are possible, for example the contactor functionality could be integrated into the overload protection device.

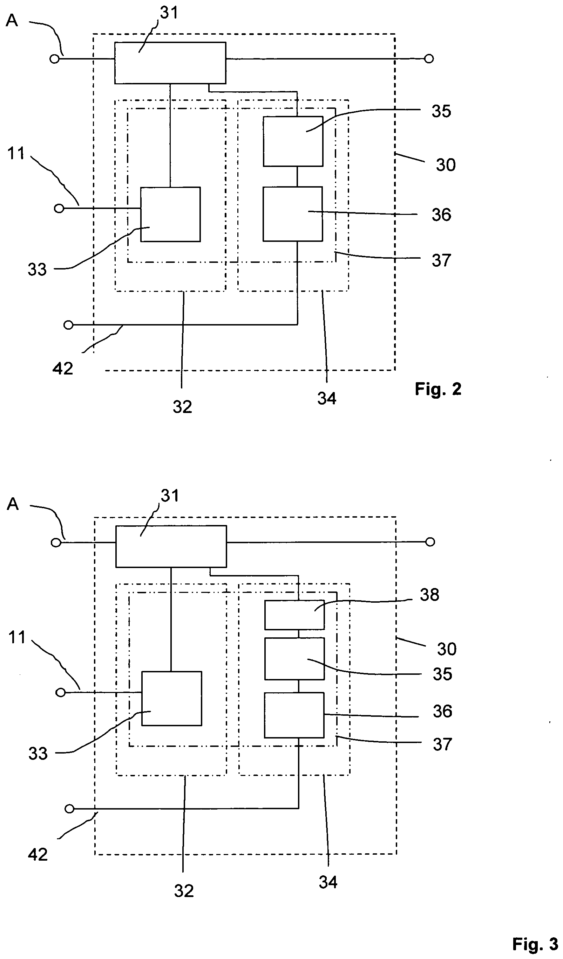

Fig. 2 shows in a principle block diagram the components of an electronic overload protection device 30 necessary for implementing and understanding the invention.

There are first means 31 for deriving a measurement signal corresponding to the load current. The first means 31 are in principle known. It can be for example current transformers, in this case the measurement signal would be a transformer current. In the simplest way it could also be resistors, the measurement signal in this case would be a voltage proportional to the load current. The first means 31 can as well comprise a zero crossing determinator, not shown, so that the measurement signal is based on recording the time difference between successive zero crossing times of the load current. The zero crossing determinator can be an electronic circuitry or a microprocessor with a functional module for computing the zero crossing times.

The first means 31 are connected to an overload control circuit 32, which comprises second means 33 for deriving an indicator signal for an overload situation based on the measurement signal. The second means 32 are functional units in principle known to be necessary to form an electronic overload protection device or overload protection relay. They comprise a microcontroller, A/D-converter, amplifiers, filter, clock generator, voltage controller, reference voltage source etc.

The overload protection device 30 further comprises a load diagnostic circuit 34, which is also connected to the first means 31. The load diagnostic circuit 34 comprises third means 35 for generating a frequency spectrum of the measurement signal, the third means being for example an FFT (fast Fourier Transform) or DFT (digital Fourier transform) algorithm within the application program of a microprocessor.

The load diagnostic circuit 34 further comprises fourth means 36 for analysing the frequency spectrum and deriving diagnostic information concerning the condition of the load from the frequency spectrum. The fourth means 36 can be realised by a frequency spectrum analyser circuit with additional evaluation logic. As described in more detail below, the ecaluation logic looks at the frequency spectrum an determines if in certain predetermined frequency ranges certain characteristic frequency peaks are detected. If yes, the evaluation logic generates a motor fault signal, which is provided to the outside of the electronic overload protection device via a signal line 42. In many cases motor controllers and motor protection devices are integrated in a process control system with the help of a fieldbus connection, e.g.

Modbus. Via this connection the control system can control the motor from remote and can also read out diagnosis information. So the signal line 42 can also be a fieldbus communication interface.

The overload control circuit 32 and the load diagnostic circuit 34 are functional blocks physically realised in one microprocessor module 37. For example, if the electronic overload relay already has a microcontroller, the load diagnostic function block can be realised by amending the application program of the microcontroller. Thus no additional hardware is needed to implement the load diagnostic function according to the invention into an electronic overload protection device. The microprocessor module 37 provides the logic functionality that is needed to realise the overload protection and load diagnosis. It is in this respect comparable to a small PLC (programmable logic controller).

Figure 3 shows a further embodiment of the invention, wherein the load diagnostic circuit 34 comprises fifth means 38 to derive an analysis signal from the measurement signal. The fifth means 38 can be a rectifier or a zero crossing determination circuit. In this embodiment an analysis signal derived from the current measurement signal is used to perform the load diagnostic function. The analysis signal can be for example the rectified current measurement signal or a signal based on recording the time difference between successive zero crossing times of the load current.

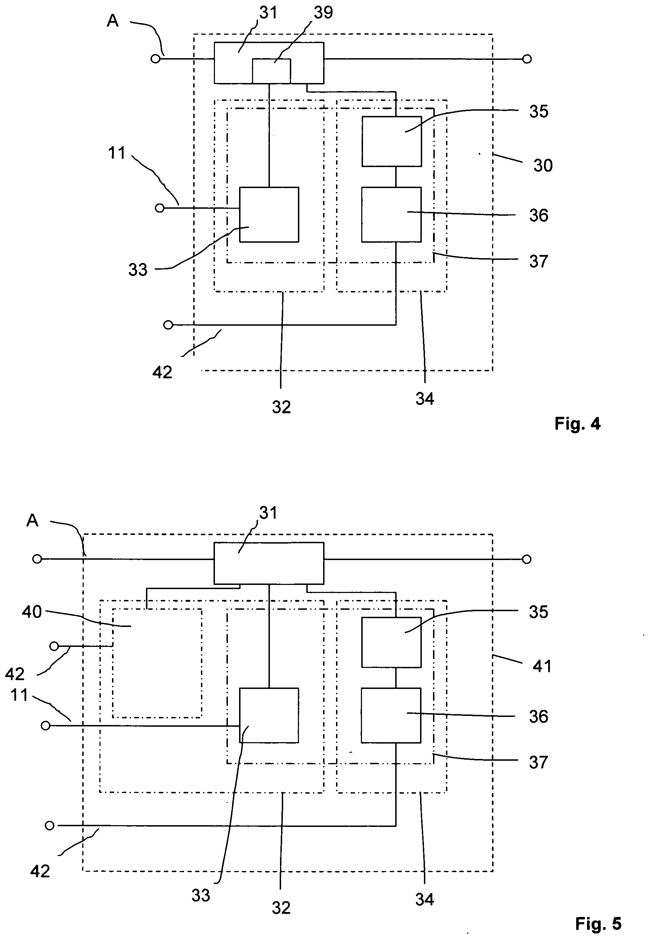

Figure 4 shows a further embodiment of the invention, wherein the first means 31 comprises a zero crossing determinator 39, so that the measurement signal is based on recording the time difference between successive zero crossing times of the load current. Both the overload protection function and the motor diagnosis function is in this embodiment based on an analysis signal derived from the current measurement signal.

Figure 5 shows a block diagram of a motor controller 41 with an overload control circuit 32, a load diagnostic circuit 34 and a motor control function block 40. The motor control function block provides additional motor control functionality to the motor controller 41, it is as well connected to the signal line 42, which can be a fieldbus communication interface. The motor control function block 40 can be an additional amendment to the application program of the microprocessor on the microprocessor module 37.

A broken rotor bar is a common fault in induction motors, lowering the motor efficiency significantly and causing potential hazards of safety. Due to the combination of poor working environment and heavy duty cycles, broken rotor bar faults frequently occur in induction motors. When the bars get cracked at their connecting end rings, they are called broken bars. Detection of such broken rotor bars is highly desired in the industries.

The broken bar fault is reflected in the stator current spectrum as the presence of twice slip frequency components and their harmonics, expressed analytically as

$$f_{brb} = \left(1 \pm 2ks\right)f_1$$

where $s$ is the slip, $f_1$ the supply frequency, and a parameter $k = 1,2,3,....$ The slip $s$ is defined as

$$s = \frac{f_{syn} - f_r}{f_{syn}},$$

where, $f_{syn}$ and $f_r$ are the synchronous and the rotor frequency respectively. The amplitudes of these additional frequency components in the stator current are determined by the fault severity (number of broken rotor bars). Actually, when the number of broken rotor bars is much smaller than the number of total rotor bars, only $(1 \pm 2s)f_1$ frequency components will appear in the stator current spectrum. As the number of broken rotor bar increases, higher order harmonics will then arise. Thus, the first order sideband frequency components at $(1 \pm 2s)f_1$ Hz are considered as the most characteristic indication of broken rotor bar faults.

Stator short problem occurs when there is turn-to-turn short-circuit, due to burning and melting of insulation, wires etc, within a coil, coils of same phase or open-circuit in any phase. In these cases, the motor may still continue to operate, but eventually the problems become more intense like phase-to-phase, phase-to-earth short-circuit, and finally the motor stops operating.

The stator short problem could be detected by using the following relation

$$f_{st} = \left(\frac{n(1-s)}{p} \pm k\right)f_1,$$

where, $s$ is the slip, $f_1$ the supply frequency, $p$ the pole pairs, $n, k$ are two parameters, $n = 1,2,3,...,$ and $k = 1,3,5,....$ The stator shorts can be detected by locating the appearance of the frequency $f_{st}$ in the frequency spectrum of the stator current.

Therefore, the invention principle is concentrated on the frequency spectrum analysis for example using discrete Fourier transform or fast Fourier transform, of the measurement of interest which could be the motor current, rectified version of the motor current or the zero-crossing, measured or computed, of the motor current. The key signature for the broken bar and other diagnostics features like shorted stator coil, etc. would be appearance of some frequency peak(s) of increased magnitude in some specified frequency regions which depend on the type of feature to be detected and the kind of measurement (current, rectified current, zero-crossing) used. For healthy motors, such frequency peak(s) in those regions would be absent or the magnitude of the peak(s), i.e. the decibel or dB level, would be lower.

The principle is depicted in figure 6 for broken rotor bar detection. The right side of fig. 6 shows the frequency spectrum of the motor current in the range between 1 and 10 Hz, for a motor with no broken bars. No significant peak can be seen in the spectrum. The left side of fig. 6 shows the frequency spectrum in the same frequency range, this time for a motor with a broken bar. A significant peak appears at around 4.5 Hz. The occurrence of such a peak in the frequency spectrum thus can be used as indicator for a broken rotor bar.

List of reference numerals

A    Supply line
10    contactor
11    signal line
20    motor
30    electronic overload protection device
31    first means
32    overload control circuit
33    second means
34    load diagnostic circuit
35    third means
36    fourth means
37    microprocessor module
38    fifth means
39    zero crossing determinator
40    motor control function block
41    motor controller
42    signal line

**Claims**

1.  Overload protection device (30) to protect an electric load (20), especially an induction motor (20), in a load circuit made up by an electric supply line (A) providing a load current and the electric load (20), the device comprising

    - first means (31) configured to derive a measurement signal corresponding to the load current,
    - an overload control circuit (32) configured to determine an overload situation, the overload control circuit comprising
    - second means configured to derive an indicator signal for an overload situation based on the measurement signal,

    wherein said overload protection device (30) further comprises

    - a load diagnostic circuit (34), the load diagnostic circuit (34) comprising
    - fifth means (38) configured to derive an analysis signal from the measurement signal,
- third means (35) configured to generate a frequency spectrum of the analysis signal derived from the measurement signal,
- fourth means (36) configured to analyse said frequency spectrum and configured to derive diagnostic information concerning the condition of the load from the frequency spectrum,

wherein the third means (35) is configured to perform a Discrete Fourier Transformation, DFT, or a Fast Fourier Transformation, FFT, of the measurement signal or of an analysis signal derived from the measurement signal,
wherein the fourth means (36) is configured to determine the appearance of a frequency peak of increased magnitude in a predetermined frequency region of the frequency spectrum of the analysis signal derived from the measurement signal, which depends on the type of feature to be detected.

2. A device according to claim 1, wherein the fifth means (38) comprises a rectifier so that the analysis signal corresponds to the rectified load current.

3. A device according to claim 1, wherein the fifth means (38) comprises a zero crossing determinator so that the analysis signal is based on recording the time difference between successive zero crossing times of the load current.

4. A device according to claim 1, wherein the first means (31) comprises a zero crossing determinator (39) so that the measurement signal is based on recording the time difference between successive zero crossing times of the load current.

5. A device according to claim 1, wherein the device comprises a microprocessor (37) and wherein the load diagnostic circuit (34) is realised as at least one functional software module within the application program of the microprocessor (37).

6. Motor controller (40), providing motor control and motor protection functions, comprising an overload protection device (30) according to claim 1.

7. A method to be used with an overload protection device to protect an electric load, especially an induction motor, in a load circuit, the load circuit being made up by an electric supply line providing a load current, and by the electric load, the overload protection device providing a measurement signal corresponding to the load current and an analysis signal derived from the measurement signal, wherein the analysis signal derived from the measurement signal is based on recording the time difference between successive zero crossing times of the load current, the method comprising the steps of:

- generating a frequency spectrum of the analysis signal,
- analysing said frequency spectrum, to detect the appearance of a frequency peak in a predetermined frequency region of the frequency spectrum, the frequency peak being characteristic for specific faults in the load circuit, and
- producing a fault indicating signal, indicative of specific faults depending on the peak frequency.

8. The method according to claim 7, wherein a signal indicating the occurrence of a broken rotor bar in an induction motor is produced if peaks in the frequency spectrum are detected at frequencies $f_{brb}$:

$$f_{brb} = \left(1 \pm 2ks\right)f_1$$

where $s$ is the slip, $f_1$ the supply frequency, and a parameter $k = 1,2,3,....$

9. The method according to claim 7, wherein, a signal indicating the occurrence of a winding shortage is produced if peaks in the frequency spectrum are detected at frequencies $f_{st}$:

$$f_{st} = \left(\frac{n(1-s)}{p} \pm k\right)f_1,$$

where, $s$ is the slip, $f_1$ the supply frequency, $p$ the pole pairs, $n$, $k$ are two parameters, $n =1,2,3,...$, and $k = 1,3,5,...$ .

10. Computer program with program code configured to execute the method according to claim 7, if the program is run on a computer or microprocessor.

11. Computer program product with program code configured to execute the method according to claim 7, if the program is run on a computer or microprocessor.

**Patentansprüche**

1. Überlastungsschutzvorrichtung (30) zum Schutz einer elektrischen Last (20), insbesondere eines Induktionsmotors (20), in einer Lastschaltung, die aus einer elektrischen Zuleitung (A), die einen Laststrom bereitstellt, und der elektrischen Last (20) besteht, wobei die Vorrichtung Folgendes umfasst:

- ein erstes Mittel (31), das dazu ausgelegt ist, ein Messsignal, das dem Laststrom entspricht, abzuleiten,

- eine Überlaststeuerschaltung (32), die dazu ausgelegt ist, eine Überlastsituation zu bestimmen, wobei die Überlaststeuerschaltung Folgendes umfasst:

- ein zweites Mittel, das dazu ausgelegt ist, ein Anzeigesignal für eine Überlastsituation auf Basis des Messsignals abzuleiten,

wobei die Überlastungsschutzvorrichtung (30) ferner Folgendes umfasst:

- eine Lastdiagnoseschaltung (34), wobei die Lastdiagnoseschaltung (34) Folgendes umfasst:
- ein fünftes Mittel (38), das dazu ausgelegt ist, ein Analysesignal aus dem Messsignal abzuleiten,
- ein drittes Mittel (35), das dazu ausgelegt ist, ein Frequenzspektrum des Analysesignals, das aus dem Messsignal abgeleitet wurde, zu erzeugen,
- ein viertes Mittel (36), das dazu ausgelegt ist, das Frequenzspektrum zu analysieren, und dazu ausgelegt ist, Diagnoseinformationen bezüglich des Zustands der Last aus dem Frequenzspektrum abzuleiten,

wobei das dritte Mittel (35) dazu ausgelegt ist, eine diskrete Fouriertransformation, DFT, oder eine schnelle Fouriertransformation, FFT, des Messsignals oder eines Analysesignals, das aus dem Messsignal abgeleitet wurde, durchzuführen,

wobei das vierte Mittel (36) dazu ausgelegt ist, das Erscheinungsbild einer Frequenzspitze erhöhter Größe in einem vorbestimmten Frequenzbereich des Frequenzspektrums des Analysesignals, das aus dem Messsignal abgeleitet wurde, das von der Art des Merkmals, das detektiert werden soll, abhängig ist, zu bestimmen.

2. Vorrichtung nach Anspruch 1, wobei das fünfte Mittel (38) einen Gleichrichter umfasst, derart, dass das Analysesignal dem gleichgerichteten Laststrom entspricht.

3. Vorrichtung nach Anspruch 1, wobei das fünfte Mittel (38) einen Nulldurchgangsbestimmer umfasst, derart, dass das Analysesignal auf der Aufzeichnung der Zeitdifferenz zwischen aufeinanderfolgenden Nulldurchgängen des Laststroms basiert.

4. Vorrichtung nach Anspruch 1, wobei das erste Mittel (31) einen Nulldurchgangsbestimmer (39) umfasst, derart, dass das Messsignal auf der Aufzeichnung der Zeitdifferenz zwischen aufeinanderfolgenden Nulldurchgängen des Laststroms basiert.

5. Vorrichtung nach Anspruch 1, wobei die Vorrichtung einen Mikroprozessor (37) umfasst und wobei die Lastdiagnoseschaltung (34) als mindestens ein funktionelles Softwaremodul im Anwendungsprogramm des Mikroprozessors (37) realisiert ist.

6. Motorsteuerung (40), die Motorsteuer- und Motorschutzfunktionen bereitstellt und eine Überlastungsschutzvorrichtung (30) nach Anspruch 1 umfasst.

7. Verfahren, das mit einer Überlastungsschutzvorrichtung zu verwenden ist, um eine elektrische Last, insbesondere einen Induktionsmotor, in einer Lastschaltung zu schützen, wobei die Lastschaltung aus einer elektrischen Zuleitung, die einen Laststrom bereitstellt, und der elektrischen Last besteht, wobei die Überlastungsschutzvorrichtung ein Messsignal bereitstellt, das dem Laststrom entspricht, und ein Analysesignal, das aus dem Messsignal abgeleitet wird, wobei das Analysesignal, das vom Messsignal abgeleitet wird, auf der Aufzeichnung der Zeitdifferenz zwischen aufeinanderfolgenden Nulldurchgängen des Laststroms basiert, wobei das Verfahren die folgenden Schritte umfasst:

- Erzeugen eines Frequenzspektrums des Analysesignals,
- Analysieren des Frequenzspektrums, um das Erscheinungsbild einer Frequenzspitze in einem vorbestimmten Frequenzbereich des Frequenzspektrums zu detektieren, wobei die Frequenzspitze für spezifische Fehler in der Lastschaltung charakteristisch ist, und
- Produzieren eines Fehleranzeigesignals, das in Abhängigkeit von der Spitzenfrequenz spezifische Fehler anzeigt.

8. Verfahren nach Anspruch 7, wobei ein Signal, das das Auftreten eines gebrochenen Rotorstabs in einem Induktionsmotor anzeigt, produziert wird, wenn Spitzen im Frequenzspektrum bei Frequenzen $f_{brb}$ detektiert werden:

$$f_{brb} = (1 \pm 2ks) \cdot f_1$$

wo s der Schlupf, $f_1$ die Versorgungsfrequenz und ein Parameter $k = 1,2,3.....$ ist.

9. Verfahren nach Anspruch 7, wobei ein Signal, das das Auftreten eines Wicklungskurzschlusses anzeigt, produziert wird, wenn Spitzen im Frequenzspektrum bei Frequenzen $f_{st}$ detektiert werden:

$$f_{sl} = \left( \frac{n(1-s)}{p} \pm k \right) f_1 ,$$

wo *s* der Schlupf ist, •$_1$ die Versorgungsfrequenz ist, *p* die Polpaare sind, *n, k* zwei Parameter sind, *n* = 1,2,3,... ist und *k* = 1,3,5,... ist.

**10.** Computerprogramm mit einem Programmcode, der dazu ausgelegt ist, das Verfahren nach Anspruch 7 auszuführen, wenn das Programm auf einem Computer oder Mikroprozessor abläuft.

**11.** Computerprogrammprodukt mit einem Programmcode, der dazu ausgelegt ist, das Verfahren nach Anspruch 7 auszuführen, wenn das Programm auf einem Computer oder Mikroprozessor abläuft.

**Revendications**

**1.** Dispositif de protection contre les surcharges (30) destiné à protéger une charge électrique (20), particulièrement un moteur à induction (20), dans un circuit de charge composé par une ligne d'alimentation électrique (A) fournissant un courant de charge et la charge électrique (20), le dispositif comprenant

- un premier moyen (31) configuré pour dériver un signal de mesure correspondant au courant de charge,
- un circuit de contrôle de surcharge (32) configuré pour déterminer une situation de surcharge, le circuit de contrôle de surcharge comprenant
- un deuxième moyen configuré pour dériver un signal indicateur d'une situation de surcharge en fonction du signal de mesure,

ledit dispositif de protection contre les surcharges (30) comprenant en outre

- un circuit de diagnostic de charge (34), le circuit de diagnostic de charge (34) comprenant

- un cinquième moyen (38) configuré pour dériver un signal d'analyse à partir du signal de mesure,
- un troisième moyen (35) configuré pour générer un spectre de fréquences du signal d'analyse dérivé à partir du signal de mesure,
- un quatrième moyen (36) configuré pour analyser ledit spectre de fréquences et configuré pour dériver des informations de diagnostic concernant l'état de la charge à partir du spectre de fréquences,

dans lequel le troisième moyen (35) est configuré pour exécuter une transformation de Fourier discrète, DFT, ou une transformation de Fourier rapide, FFT, du signal de mesure ou d'un signal d'analyse dérivé à partir du signal de mesure,
dans lequel le quatrième moyen (36) est configuré pour déterminer l'aspect d'un pic de fréquence d'une grandeur accrue dans une région de fréquence prédéterminée du spectre de fréquences du signal d'analyse dérivé à partir du signal de mesure, lequel dépend du type de caractéristique à détecter.

**2.** Dispositif selon la revendication 1, dans lequel le cinquième moyen (38) comprend un redresseur de telle sorte que le signal d'analyse corresponde au courant de charge redressé.

**3.** Dispositif selon la revendication 1, dans lequel le cinquième moyen (38) comprend un déterminateur de franchissements du zéro de telle sorte que le signal d'analyse soit basé sur un enregistrement de la différence de temps entre des temps de franchissement du zéro successifs du courant de charge.

**4.** Dispositif selon la revendication 1, dans lequel le premier moyen (31) comprend un déterminateur de franchissements du zéro (39) de telle sorte que le signal de mesure soit basé sur l'enregistrement de la différence de temps entre des temps de franchissement du zéro successifs du courant de charge.

**5.** Dispositif selon la revendication 1, le dispositif comprenant un microprocesseur (37) et dans lequel le circuit de diagnostic de charge (34) est réalisé en tant qu'au moins un module logiciel fonctionnel dans le programme d'application du microprocesseur (35).

**6.** Unité de commande de moteur (40), fournissant des fonctions de commande de moteur et de protection de moteur, comprenant un dispositif de protection contre les surcharges (30) selon la revendication 1.

**7.** Procédé destiné à être utilisé avec un dispositif de protection contre les surcharges afin de protéger une charge électrique, particulièrement un moteur à induction, dans un circuit de charge, le circuit de charge étant composé par une ligne d'alimentation électrique fournissant un courant de charge, et la charge électrique, le dispositif de protection contre les surcharges fournissant un signal de mesure correspondant au courant de charge et un signal d'analyses dérivé à partir du signal de mesure, dans lequel le signal d'analyse dérivé à partir du signal de mesure est basé sur un enregistrement de la différence de temps entre des temps de franchissement du zéro successifs du courant de charge, le procédé comprenant les étapes de :

- génération d'un spectre de fréquences du signal d'analyse,
- analyse dudit spectre de fréquences, pour détecter l'aspect d'un pic de fréquence dans une région de fréquence prédéterminée du spectre de fréquences, le pic de fréquence étant une caractéristique de défauts spécifiques dans le circuit de charge, et
- production d'un signal indicateur de défauts, indicatif de défauts spécifiques en fonction de la fréquence du pic.

8. Procédé selon la revendication 7, dans lequel un signal indiquant l'occurrence d'une barre rotorique cassée dans un moteur à induction est produit si des pics dans le spectre de fréquences sont détectés à des fréquences $f_{brb}$ :

$$f_{brb} = (1 \pm 2\ ks)\ f_1$$

où $s$ est le glissement, $f_1$ est la fréquence d'alimentation, et un paramètre $k = 1,2,3,....$

9. Procédé selon la revendication 7, dans lequel un signal indiquant l'occurrence d'un court-circuit d'enroulement est produit si des pics dans le spectre de fréquences sont détectés à des fréquences $f_{st}$ :

$$f_{st} = \left( \frac{n(1-s)}{p} \pm k \right) f_1 ,$$

où $s$ est le glissement, $f_1$ est la fréquence d'alimentation, p représente les paires polaires, $n, k$ sont deux paramètres, $n = 1,2,3,...$, et $k = 1,3,5,....$

10. Programme informatique à code de programme configuré pour exécuter le procédé selon la revendication 7, si le programme est exécuté sur un ordinateur ou microprocesseur.

11. Produit de programme informatique à code de programme configuré pour exécuter le procédé selon la revendication 7, si le programme est exécuté sur un ordinateur ou microprocesseur.

**Fig. 1**

Motor with broken bar

Motor with no broken bar

**Fig. 6**

A

31

11

33

42                    32            34            **Fig. 2**

35
30
36
37

A

31

11

33

42                    32            34            **Fig. 3**

38
30
35
36
37

**Fig. 4**

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19748627 A1
- EP 0477959 A2
- US 20050007096 A1